# EUROPEAN PATENT APPLICATION

(11) **EP 1 686 474 A2**
(43) Date of publication of application: **02.08.2006**
(21) Application number: 05258121.2
(22) Date of filing: 30.12.2005
(51) Int. Cl.: G06F 9/46

(54) **Processor and information processing method**

(30) Priority: 28.01.2005 JP 2005020830
(71) Applicant: SEIKO EPSON CORPORATION, Shinjuku-ku, Tokyo 163-0811 (JP)
(72) Inventor: Tamura, Akihiko Seiko Epson Corporation, Nagano-ken 392-8502 (JP); Tanaka, Katsuya Seiko Epson Corporation, Nagano-ken 392-8502 (JP)
(74) Representative: Cloughley, Peter Andrew

(57) **Abstract**

Amultiprocessor is provided that processes high priority processing efficiently and with high responsiveness. In a mobile telephone 1, a unit processor P0 is permanently set as a unit processor that executes interrupt processing. Therefore, when interrupt processing occurs, execution of interrupt processing can be started immediately by the unit processor P0. Thus, since execution of interrupt processing can be started promptly without task switching, interrupt processing can be processed efficiently and with high responsiveness.

## Description

### Field of the Invention

The present invention relates to a processor that processes a plurality of tasks or threads parallelly and an information processing method thereof.

### Description of the Related Art

In recent years, processors referred to as "multitask processors" or "multithread processors" that are capable of processing a plurality of tasks or threads parallelly (hereunder, these are referred to by the generic term "multiprocessor") are being utilized in embedded devices and the like.

In the conventional portable devices, although processing has been performed by a single processor, processing is becoming more complicated accompanying the enhanced functionality of portable devices and processing using only a single processor is thus becoming difficult.

More specifically, when attempting to achieve a high level of functionality using a single processor, it is necessary to operate at a high clock frequency and this leads to an accompanying increase in power consumption. Further, for example, in the case of a mobile phone, it is difficult to respond properly when it is necessary to operate in real time to perform processing when an incoming call is received during playback of a moving image or the like.

In contrast, by utilizing a multiprocessor the device can be set at a low clock frequency and low power consumption can also be realized as a result. Since a plurality of tasks can also be processed parallelly, a multiprocessor is also an effective device from the viewpoint of real time responsiveness.

In this connection, JP-A-10-228385 (hereunder, referred to as "Patent Document 1") discloses technology for realizing a real time response in an apparatus that processes multiple tasks parallelly.

However, the present situation is that, according to the conventional technology including the technology disclosed in Patent Document 1, an operating system that appropriately controls the multiprocessors has not been built, and more particularly, an operating system has not been built that appropriately deals with a so-called tightly coupled multiprocessor in which a plurality of processor cores are provided on one chip and made to function as a single multiprocessor.

Therefore, in the event that processing of a high priority which requires a response in real time (hereunder, referred toas "highpriorityprocessing"), such as interrupt processing or the like, occurs when executing normal processing, a situation can arise whereby responsiveness drops with respect to the high priority processing unless each processor configuring the multiprocessor is in an idle state. In cases like this there is a problem that it is difficult to realize a real time response.

Further, there is a possibility that task switching will frequently occur in order to execute high priority processing that occurred, and this leads to a decline in processing efficiency due to an increase in overheads.

An object of this invention is to process high priority processing efficiently and with high responsiveness in a multiprocessor.

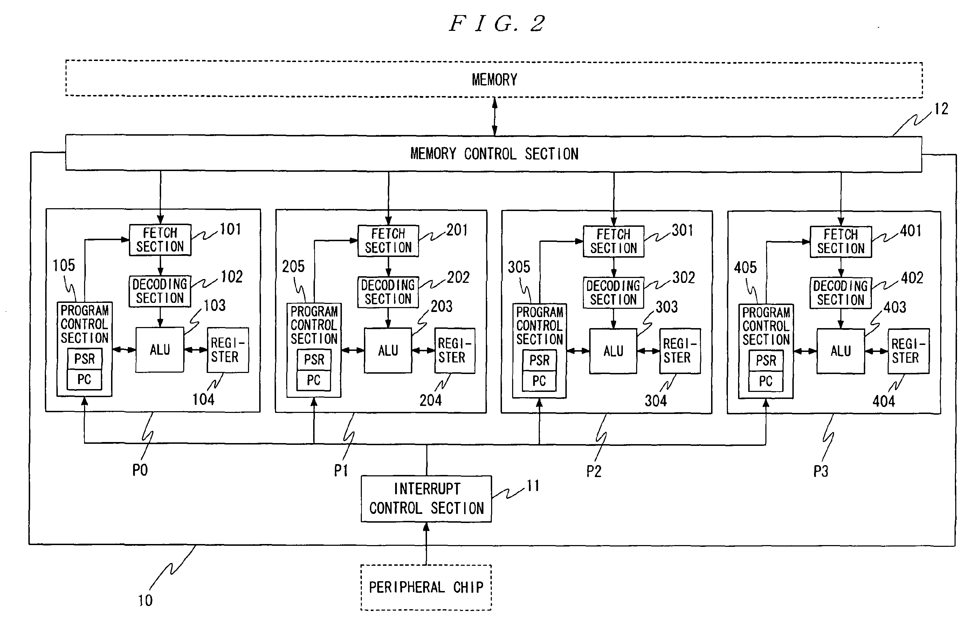

In order to solve the above described problems, according to this invention there is provided a processor comprising a plurality of processor sections (for example, the single processors P0 to P3 of FIG. 2) that process a task or a thread, wherein the processor includes a dedicated processor section (for example, the single processor P0 of FIG. 2) that exclusively processes a predetermined high priority processing (for example, interrupt processing), a general-purpose processor section (for example, the single processors P1 to P3 of FIG. 2) that performs processing other than the predetermined high priority processing (for example, application processing), and a high priority processing control section (for example, an interrupt control section 11 of FIG. 2) that causes the dedicated processor section to process the predetermined high priority processing.

According to this type of configuration, when the necessity arises to execute high priority processing, such as interrupt processing, execution of the processing can be started immediately by the dedicated processor section.

Accordingly, since execution of the high priority processing can be started promptly without task switching or the like, it is possible to process the high priority processing efficiently and with high responsiveness.

Further, a feature of the processor is that the dedicated processor section can execute as background processing of the predetermined high priority processing, processing capable of canceling a program that is being processed when the predetermined high priority processing occurs (for example, processing that does not require a real time property).

According to this type of configuration, since it is possible to improve the operating ratio of the dedicated processor section, processing can be performed with even greater efficiency.

In addition, a feature of the processor is that it is possible to switch between a mode that performs the background processing and a mode that does not perform the background processing.

According to this type of configuration, it is possible to switch as appropriate between performing background processing such as low priority processing and performing normal processing in accordance with the processing load of the processor or the like, thereby enabling the performance of more efficient processing.

Further, a feature of the processor is that the predetermined high priority processing is interrupt processing.

According to this type of configuration, it is possible to process interrupt processing efficiently and with high responsiveness even when interrupt processing occurs frequently.

According to this invention there is also provided an information processing method for a processor comprising a plurality of processor sections that process a task or a thread, wherein the method causes a predetermined high priority processing to be processed exclusively in a predetermined processor section and causes processing other than the predetermined high priority processing to be processed in a processor section other than the predetermined processor section.

Further, a feature of the information processing method is that the method causes processing capable of canceling a program that is being processed in the predetermined processor section when the predetermined high priority processing occurs to be executed as background processing of the predetermined high priority processing.

In addition, a feature of the information processing method is that the method enables switching between a mode that performs the background processing and a mode that does not perform the background processing.

Further, a feature of the information processing method is that the predetermined high priority processing is interrupt processing.

Thus, according to this invention it is possible for a multiprocessor to process high priority processing efficiently and with high responsiveness.

Embodiments of the present invention will now be described by way of further example only and with reference to the accompanying drawings, in which:-
FIG. 1 is a block diagram showing the functional configuration of a mobile telephone 1 of this invention;
FIG. 2 is a block diagram showing the internal configuration of a CPU 10;
FIG. 3 is a view showing the operations upon power-up of the mobile telephone 1;
FIG. 4 is a flowchart showing the operations in a background processing mode;
FIGS. 5A and 5B are views that illustrate and compare the operations at the time of interrupt processing according to this invention with those of the prior art; and
FIG. 6 is a view showing a configuration example of a multiprocessor as an object for application of this invention.

Hereunder, embodiments of the processor according to this invention are described referring to the figures.

The processor according to this invention is a device that processes a program in a parallel manner using the executable units thereof, such as tasks or threads. The processor according to this invention contains a hardware configuration which substantially comprises a plurality of processors (hereunder, referred to as "unit processor") that execute tasks and the like.

Thus, by permanently assigning a unit processor among the plurality of unit processors as a processor that executes high priority processing (interrupt processing and the like), high responsiveness is ensured for high priority processing.

Further, in the unit processor that executes high priority processing, even if high priority processing arises during execution of processing in which high priority processing is not being executed, the unit processor performs background processing of low priority processing that is capable of canceling the program that is being processed (i. e. discarding the data being processed by that program).

It is thus possible to prevent a decrease in the operating ratio of the unit processor that executes high priority processing.

The processor of this invention can thus process high priority processing efficiently and with high responsiveness.

First, the configuration of the processor is described.

In this case, an example is described in which the processor of this invention is incorporated into a mobile telephone and interrupt processing is taken as the high priority processing. In the following description, executable units of a program such as threads and the like are referred to generically as "tasks".

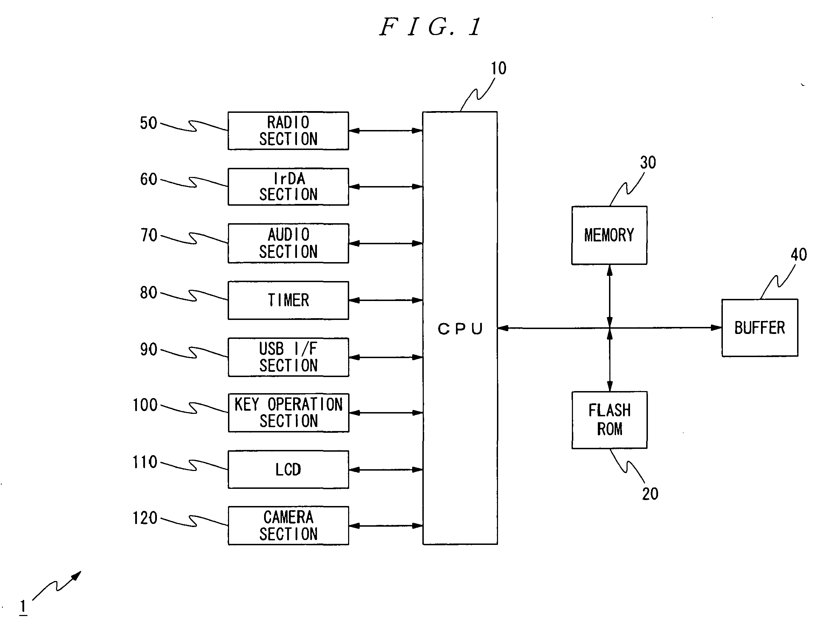

FIG. 1 is a block diagram showing the functional configuration of a mobile telephone 1 of this invention.

In FIG. 1, a mobile telephone 1 consists of a CPU (Central Processing Unit) 10, a flash ROM 20, a memory 30, a buffer 40, a radio section 50, an IrDA (Infrared Data Association) section 60, an audio section 70, a timer 80, a USB (Universal Serial Bus) interface section 90, a key operation section 100, a LCD (Liquid Crystal Display) 110 and a camera section 120. The CPU 10, the flash ROM 20, the memory 30 and the buffer 40 are connected by a bus. The radio section 50, the IrDA section 60, the audio section 70, the timer 80, the USB interface section 90, the key operation section 100, the LCD 110 and the camera section 120 are directly connected to the CPU 10.

The CPU 10 is a device that controls the overall operation of the mobile telephone 1 while processing a plurality of tasks parallelly. The CPU 10 reads out an operating system program (OS) or various application programs that were stored in the flash ROM 30 in accordance with various instruction signals input from the key operation section 100, or the CPU 10 executes an interrupt handler in accordance with an interrupt signal input from a peripheral chip of the radio section 50, the audio section 70, the camera section 120 or the like.

For example, the CPU 10 processes parallelly a task generated by the operating system and a task generated by an application. Further, when an interrupt signal is input from a peripheral chip the CPU 10 executes an interrupt handler to start the application corresponding to the interrupt signal. In this connection, since processing by an application is executed as a task that is managed by the task scheduler of the operating system, it is possible to invoke an operating system service call for that processing, and conversely, since interrupt processing is processing is that is not managed by the task scheduler (non-task processing), it is not possible to invoke an operating system service call for interrupt processing.

The CPU 10 also stores various processing results in the flash ROM 20 or the memory 30.

Next, the internal configuration of the CPU 10 is described.

FIG. 2 is a block diagram showing the internal configuration of the CPU 10.

In FIG. 2, the CPU 10 consists of a plurality of unit processors P0 to P3, an interrupt control section 11 and a memory control section 12.

The unit processors P0 to P3 are processors that are capable of processing tasks in parallel with each other. Among the unit processors P0 to P3, in this embodiment the unit processor P0 is taken as a processor that is dedicated to executing interrupt processing. Therefore, when an interrupt signal occurs in a peripheral chip, the interrupt signal is input into the unit processor P0.

In this connection, since the unit processors P0 to P3 have the same internal configuration, the internal configuration of the unit processor P0 will be described as a representative thereof.

The unit processor P0 consists of a fetch section 101, a decoding section 102, an ALU (Arithmetic and Logical Unit) 103, a register 104, and a program control section 105.

The fetch section 101 reads out an instruction code from a memory address indicated by a program counter of the program control section 105 (described later), and outputs the instruction code to the decoding section 102.

The decoding section 102 decodes the instruction code that was input by the fetch section 101 and outputs the decoding result (instruction contents, address of source register and destination register and the like) to the ALU 103.

In accordance with the decoding result that was input by the decoding section 102, the ALU 103 performs a predetermined operation and writes the operation result in the register 104 or outputs the address of a branch destination as an operation result such as a branch instruction to the program control section 105.

The register 104 is a register group that stores data read out from the memory 30 by a load instruction or the data that is the operation result of the ALU 103.

The program control section 105 is a device that performs overall control of the unit processor P0. The program control section 105 consists of a status register (PSR) that stores the status (for example, status indicating whether or not interrupt is enabled, status showing whether or the not the processing being executed is background processing, or the overflow occurrence status in the unit processor P0) of the unit processor P0, and a program counter (PC) that stores the memory address in which an instruction to be executed next by the unit processor P0 is stored. The program control section 105 changes the value of the status register to a value indicating that interrupt processing is disabled while the unit processor P0 is executing interrupt processing, or changes the value of the program counter to the address of the branch destination when a branch instruction was executed.

When an interrupt signal was input from a peripheral chip such as the radio section 50, the interrupt control section 11 arbitrates the interrupt signal and then outputs a predetermined interrupt signal to the unit processor P0.

The memory control section 12 is provided between the CPU 10 and the memory 30, and when reading or writing of data is performed by the CPU 10 with respect to the memory 30 the memory control section 12 controls the memory 30 to execute input or output of the data.

As described above, in this embodiment interrupt processing is processed by the unit processor P0 and the other unit processors mainly process tasks generated by applications.

More specifically, the unit processor P0 executes boot processing upon power-up of the mobile telephone 1, initialization processing of the operating system, operating system processing in response to a service call, processing caused by an interrupt handler, and background processing with respect to interrupt processing (for example, write processing to the flash ROM 20 or processing that does not require a real time property (such as memory garbage collection, display of the remaining amount of battery power, and hardware monitor processing). Of these, the boot processing and initialization processing of the operating system are only executed at startup and do not occur at the same time as interrupt processing, and background processing is processing of a priority that is low enough to permit the data being processed to be discarded when interrupt processing occurs. Further, operating system processing in response to a service call is processing executed in response to a service call that is called as appropriate during background processing. In this connection, as described above, an operating system service call cannot be invoked during interrupt processing (non-task processing).

The unit processors P1 to P3 execute tasks generated by applications in an order determined by the operating system task scheduler, and invoke an operating system service call as appropriate during that processing.

Returning to FIG. 1, the flash ROM 20 stores various application programs and the operating systemprogram executed in the mobile telephone 1.

The memory 30 consists of a semiconductor memory such as a DRAM (Dynamic Random Access Memory), SRAM (Static Random Access Memory) or a SDRAM (Synchronous DRAM), and forms a work area that is used when the CPU 10 executes processing and also stores the processing results.

The buffer 40 is a buffer that temporarily holds data input into the mobile telephone 1 from outside or data that was generated within the mobile telephone 1.

The radio section 50 is a device that conducts radio communication between the mobile telephone 1 and a base station of a mobile telephone system. For example, when the radio section 50 receives a signal indicating an incoming call for the mobile telephone 1 from a base station, it outputs an interrupt signal to the CPU 10 to notify the CPU 10 of reception of the incoming call signal. Further, when a signal designating an outgoing transmission is input to the radio section 50 from the CPU 10, the radio section 50 sends a signal indicating a transmission request to a base station.

The IrDA section 60 is an interface that performs communication that is based on IrDA. When the IrDA section 60 receives a radio signal that is based on IrDA from outside, it outputs an interrupt signal to the CPU 10 to notify the CPU 10 of reception of an IrDA signal.

The audio section 70 is a device that processes audio signals that are input to or output from the mobile telephone 1. The audio section 70 performs processing such as inputting or outputting speech of a telephone conversation using a microphone and speaker, or playing back music or the like.

The timer 80 measures time based on a clock signal of the mobile telephone 1 and outputs an interrupt signal to the CPU 10 at intervals of a predetermined time, for example, every 1 ms.

The USB interface section 90 is an interface for performing communication by means of a USB. When a USB cable is connected to the USB interface section 90 or when the USB interface section 90 receives a signal from a USB cable, it outputs an interrupt signal to the CPU 10.

The key operation section 100 is equipped with various keys for inputting instructions to the mobile telephone 1, and when these keys are pressed the key operation section 100 outputs an interrupt signal to the CPU 10.

The LCD 110 is a display device that displays a predetermined screen in accordance with a rendering instruction for characters or an image or the like that was input by the CPU 10.

The camera section 120 is equipped with an image pickup device such as a CCD (Charge Coupled Device) or CMOS (Complementary Metal Oxide Semiconductor) sensor or the like. When the camera section 120 images an image, it outputs an interrupt signal to the CPU 10.

Next, the operationof the mobile telephone 1 is described.

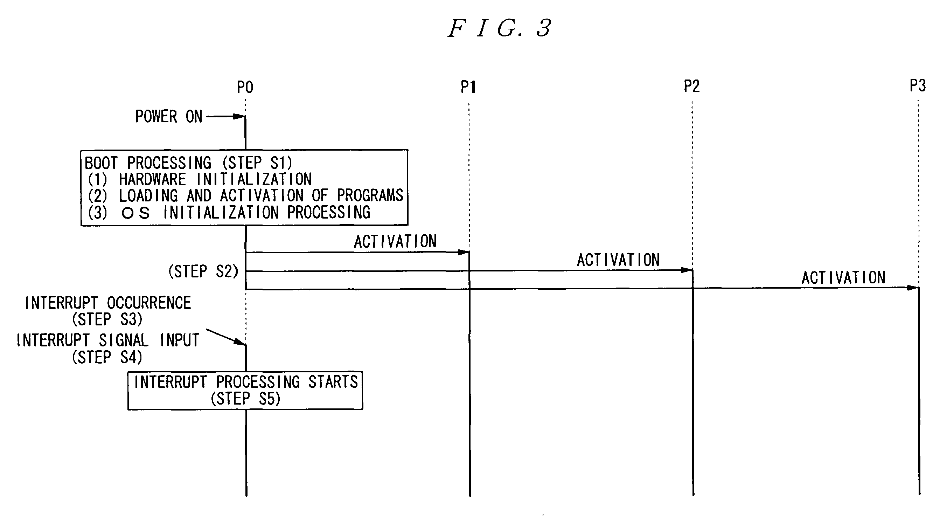

FIG. 3 is a view showing the operations upon power-up of the mobile telephone 1.

In FIG. 3, when power is applied to the mobile telephone 1, boot processing (initialization of each piece of hardware, loading and activation of programs and operating system initialization processing) is executed in the unit processor P0 (step S1) . In this connection, the parts indicated by solid lines in the figure indicate that the respective unit processors are in a state of executing processing, and the parts indicated by dotted lines indicate that processing is not being performed.

Next, the unit processor P0 starts up the unit processors P1 to P3 to cause them to execute the tasks of applications (for example, processing to playback a moving image) for which execution instructions were received (step S2).

Thereafter, the unit processor P0 enters an idle state and the unit processors P1 to P3 enter a state of executing the application tasks.

Next, it is assumed that an interrupt (for example, reception of an incoming call signal) occurs in the mobile telephone 1 (step S3).

Upon occurrence of the interrupt, the interrupt control section 11 of the CPU 10 outputs an interrupt signal to the unit processor P0 (step S4) . In this connection, if interrupt signals are input from a plurality of peripheral chips at this time, the interrupt control section 11 arbitrates these signals and then outputs the interrupt signal with the highest priority to the unit processor P0.

Upon receiving the interrupt signal, the unit processor P0 immediately executes an interrupt handler to start interrupt processing (step S5).

Thus, it is possible to perform interrupt processing efficiently and with high responsiveness without task switching.

Further, when background processing was being performed at the time interrupt processing occurred, the unit processor P0 temporarily switches to a halt state, and thereafter executes only the interrupt processing.

At this time, data relating to the background processing that is being processed is discarded.

Next, operations relating to background processing are described.

Background processing can be executed by switching the CPU 10 to a background processing mode. As service calls relating to the background processing mode, "bak_sta()" that starts background processing, "bak_stp()" that stops backgroundprocessing, and "bak_cmd()" that notifies a command with respect to background processing are available.

Background processing is started by one of the unit processors P1 to P3 invoking the service call "bak_sta()".

In this connection, after "bak_sta () " is invoked, a start instruction for the background processing mode is recognized at the activation timing (every 1 ms or the like) of the operation system timer interrupt in the unit processor P0, and thereafter the CPU 10 actually switches to the background processing mode taking the interrupt processing that occurred first as a trigger.

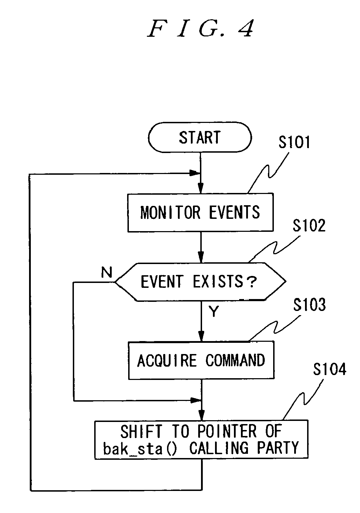

FIG. 4 is a flowchart showing the operations in the background processing mode.

When the CPU 10 switches to the background processing mode, upon acquiring the command notified by "bak_cmd()" the unit processor P0 conducts monitoring of events that should undergo background processing (step S101) by polling, and then determines the existence or non-existence of an event that should undergo background processing (step S102).

When the CPU 10 determines in step S102 that an event exists that should undergo background processing, the unit processor P0 acquires the command that was notified by "bak_cmd()" (step S103) to thereby execute the background processing.

Subsequently, the unit processor P0 switches again to the pointer as the calling party of "bak_sta()" (step S104), and returns to step S101.

Further, in step S102, when there is no event that should undergo background processing the unit processor P0 shifts to the processing of step S104.

Subsequently, when "bak_stp()" is called from the unit processor among the unit processors P1 to P3 that called "bak_sta()", the unit processor P0 temporarily switches to a halt state and then ends the background processing. Thereafter, the unit processor P0 enters a state in which it executes only interrupt processing without performing background processing.

Thus, by calling "bak_sta()" and "bak_stp()" in a program, it is possible to switch as appropriate between a mode that performs background processing and a mode that does not perform background processing.

As described in the foregoing, in the CPU 10 of the mobile telephone 1 of this embodiment the unit processor P0 is permanently set as a unit processor that executes interrupt processing.

Therefore, when interrupt processing occurs, execution of the interrupt processing can be started immediately by the unit processor P0.

Accordingly, since it is possible to promptly start execution of interrupt processing without task switching, interrupt processing can be processed efficiently and with high responsiveness.

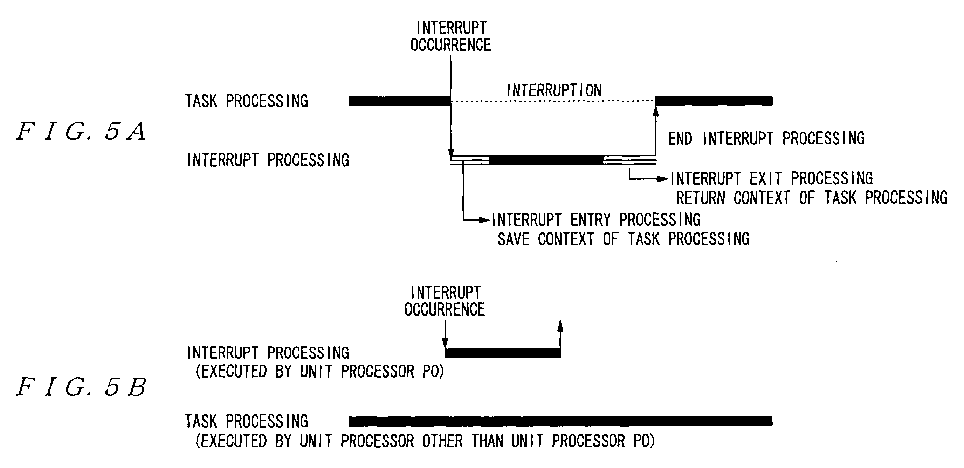

For example, as shown in FIG. 5A, in the conventional technology when an interrupt occurs during processing of a task, a procedure is adopted whereby the interrupt processing is executed after saving the context of the task processing, and after completing the interrupt processing the context of the task processing is returned to continue the task processing.

In contrast, as shown in FIG. 5B, according to this invention, after interrupt processing occurs it is possible to immediately shift to execution of the interrupt processing without the need to save or return context or the like, enabling the interrupt processing to be processed efficiently and with high responsiveness.

In this connection, although this invention can be applied to processors of various implementation configurations referred to as multithreadprocessors ormultitaskprocessors, for example, the invention is particularly effective in a type of multiprocessor in which a plurality of processor cores are mounted on one chip and at least one part of the components of the processor is shared by these plurality of processor cores (a so-called tightly coupled multitask processor).

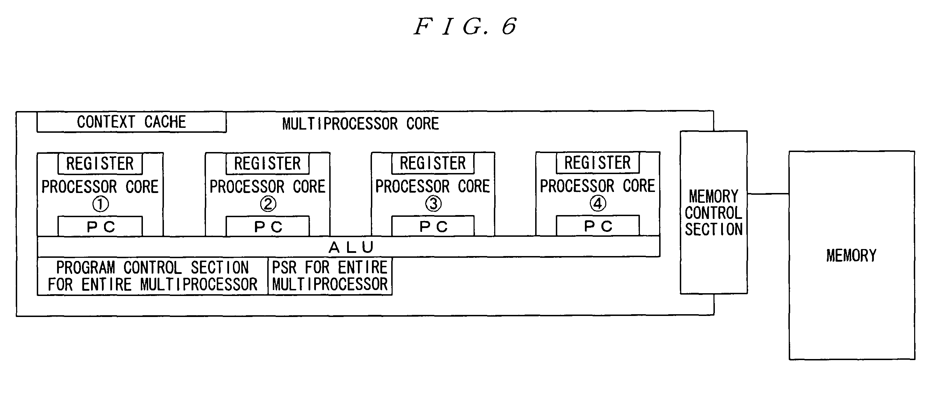

FIG. 6 is a view showing a configuration example of a multiprocessor as an obj ect for application of this invention.

The multiprocessor shown in FIG. 6 has a configuration in which a plurality of processor cores share a memory control section and an ALU. Each of the processor cores comprises a program counter and a control register such as a status register. The multiprocessor also separately comprises a control register and a program control section for controlling the overall operations of the multiprocessor. In this connection, as shown in FIG. 6, the multiprocessor may also comprise a context cache or the like that is shared by the respective processor cores.

In a multiprocessor having this type of configuration, the respective processor cores realize the functions of the unit processors of the present embodiment.

The aforegoing description has been given by way of example only and it will be appreciated by a person skilled in the art that modifications can be made without departing from the scope of the present invention.

## Claims

1. A processor comprising a plurality of processor sections that process a task or a thread, wherein the processor includes :
a dedicated processor section that exclusively processes a predetermined high priority processing;
a general-purpose processor section that performs processing other than the predetermined high priority processing; and
a high priority processing control section that causes the dedicated processor section to process the predetermined high priority processing.

2. The processor according to claim 1, wherein the dedicated processor section executes as background processing of the predetermined high priority processing, processing capable of canceling a program that is being processed when the predetermined high priority processing occurs.

3. The processor according to claim 2, wherein the processor can switch between a mode that performs the background processing and a mode that does not perform the background processing.

4. The processor according to any one of claims 1 to 3, wherein the predetermined high priority processing is interrupt processing.

5. An information processing method for a processor comprising a plurality of processor sections that process a task or a thread, wherein the method causes a predetermined high priority processing to be processed exclusively in a predetermined processor section and causes processing other than the predetermined high priority processing to be processed in a processor section other than the predetermined processor section.

6. The information processing method according to claim 5, wherein the method causes processing capable of canceling a program that is being processed in the predetermined processor section when the predetermined high priority processing occurs to be executed as background processing of the predetermined high priority processing.

7. The information processing method according to claim 6, wherein the method enables switching between a mode that performs the background processing and a mode that does not perform the background processing.

8. The information processing method according to any one of claims 5 to 7, wherein the predetermined high priority processing is interrupt processing.
